# EUROPEAN PATENT APPLICATION

(11) **EP 4 488 950 A1**
(43) Date of publication of application: **08.01.2025**
(21) Application number: 23183374.0
(22) Date of filing: 04.07.2023
(51) Int. Cl.: G06T 17/20, G06T 15/04

(54) **TEXTURE TRANSFER IN MESH SIMPLIFICATION**

(71) Applicant: Melown Technologies SE, 150 00 Praha 5 - Hlubocepy (CZ)
(72) Inventor: Cervený, Jakub, 169 00 Praha 6 (CZ); Zapletal, Jan, 708 00 Ostrava-Poruba (CZ)
(74) Representative: Kaminski Harmann

(57) **Abstract**

The invention pertains to a computer-implemented method for simplifying a textured polygonal mesh of a three-dimensional model, the method comprising: obtaining 3D mesh data and texture data related to a first textured polygonal mesh, the first textured polygonal mesh having a first level of detail, the texture data comprising a plurality of texels; generating, based on the 3D mesh data, a simplified polygonal mesh for a second level of detail, the second level of detail being lower than the first level of detail; generating (150), based on the texture data, a simplified texture for the simplified polygonal mesh; and providing a simplified textured polygonal mesh based on the generated simplified polygonal mesh and the generated simplified texture, wherein generating the simplified texture comprises: converting (152) the first textured polygonal mesh to a coloured point cloud, wherein each point of the point cloud corresponds to one texel; spatially sorting (154) the points of the point cloud; projecting (156) the points of the point cloud to a surface of the simplified polygonal mesh; and filtering (158) the projected points using a resampling filter.

## Description

The present invention generally pertains to simplification of textured polygonal meshes (e.g. textured triangular meshes). The present invention proposes a simple and fast algorithm to transfer texture data from a high resolution mesh to an independently parametrized simplified mesh. The method naturally allows for high quality filtering when downsampling the texture.

For polygonal meshes not comprising any attributes such as texture, geometric simplification of a mesh is a well-studied problem. For instance, the Quadric Error edge-collapse simplification by Garland and Heckbert or the volume-preserving method of Lindstrom and Turk are widely used to decimate plain meshes to facilitate distribution and rendering of multi-resolution 3D content.

Simplification of textured meshes, however, is more complicated. It is still deemed nontrivial and an active area of academic research. One of the difficulties is that even if the mesh represents a single manifold surface, its parametrization ("unwrapping") in the texture space (using UV coordinates) can rarely be continuous, and typically comprises multiple islands or "patches" that are mapped to the 3D surface. The surface then inevitably comprises texture "seams" or UV discontinuities that complicate removal of polygons (e.g. triangles) in mesh simplification (be it vertex or edge collapse).

In computer graphics, game development and similar fields, it is common practice to assume a high-quality UV parametrization where the number of seams is minimized. Mesh simplification is then restricted in order to prevent collapsing geometry around UV seams, so that the topology of the parametrization is preserved and the texture image can simply be downscaled after the mesh has been simplified. Disadvantageously however, this restriction severely limits automatic mesh decimation.

To enable aggressive simplification that is needed to distribute multi-resolution content such as a large-scale urban photogrammetric reconstruction, the original UV parametrization cannot be preserved. In other words, the simplified mesh needs to be independently "unwrapped" and the texture atlas needs to be regenerated. To transfer the colour information, a high-quality 1:1 mapping between the parametrizations of the two meshes needs to be constructed, which is a highly non-trivial task subject to state-of-the-art computer graphics research.

In photogrammetry, the problem of mapping between different parametrizations can be avoided by calculating the texture for each level of detail (LOD) mesh independently. Disadvantageously, this approach suffers from artifacts when switching between the resulting textured LODs. With independent texturing, it is hard to ensure perfectly consistent selection of projection sources and their blending weights at each point of the surface.

Consequently, there is a need for a transfer of texture from a high-resolution textured mesh to a simplified mesh. In certain embodiments, which utilize more than two levels of detail, the texture needs to be transferred from the finest LOD to all coarser LODs, while ensuring perfect consistency.

In addition, in order to avoid excessive blurring, Moiré and other sampling artifacts, a high quality filtering is also desirable when downsampling the texture.

In manual 3D modelling, 3D artists often use the method of "texture baking" to store precomputed data such as high-resolution normals, ambient occlusion, etc., in special-purpose textures. In theory, this technique could be used to transfer colour from a high-resolution mesh to an independently unwrapped simplified mesh. Ray casting from the target surface is typically used to sample the source surface, which however may be expensive and does not guarantee high-quality filtering. The present invention proposes working directly with the source colour samples and perform their projection to the target surface, instead of casting rays in the opposite direction.

It is therefore an object of the present invention to provide an improved method for simplification of textured polygonal meshes.

In particular, it is an object to provide such a method that provides a simple and fast solution for transferring texture data from a high resolution mesh to one or more independently parametrized simplified meshes, while applying a high-quality downsampling filter.

At least one of these objects is achieved by the computer-implemented method of claim 1, and/or the dependent claims of the present invention.

A first aspect of the invention pertains to a computer-implemented method for simplifying a textured polygonal mesh of a three-dimensional model, e.g. a model of an environment, the method comprising:
- obtaining 3D mesh data and texture data related to a first textured polygonal mesh, the first textured polygonal mesh having a first level of detail, the texture data comprising a plurality of texels;
- generating, based on the 3D mesh data, a simplified polygonal mesh for a second level of detail, the second level of detail being lower than the first level of detail;
- generating, based on the texture data, a simplified texture for the simplified polygonal mesh; and
- providing a simplified textured polygonal mesh based on the generated simplified polygonal mesh and the generated simplified texture.

According to this aspect of the invention, generating the simplified texture comprises:
- converting the first textured polygonal mesh to a coloured point cloud, wherein each point of the point cloud corresponds to one texel;
- spatially sorting the points of the point cloud;
- projecting the points of the point cloud to a surface of the simplified polygonal mesh; and
- filtering the projected points using a resampling filter.

According to some embodiments of the method, converting the first textured polygonal mesh to a coloured point cloud comprises, for each texel that corresponds to a surface point on a surface of the first textured polygonal mesh:
- calculating world coordinates of the surface point; and
- adding a point-colour pair to an array.

According to some embodiments of the method, spatially sorting the points comprises:
- using a kd-sort algorithm to achieve an ordering over the point set as implied by a k-dimensional tree; and
- reordering the points in-place.

In some embodiments, a QuickSelect partial sort algorithm is used to find the median at each level of the k-dimensional tree.

According to some embodiments of the method, projecting the points comprises, for each texel of the simplified mesh and the corresponding world position:
- finding all nearby points of the coloured point cloud that are within a given radius around the respective world position, and
- projecting the found points to a plane of the surface of the simplified mesh that contains the texel of the simplified mesh, along a normal vector of the plane.

The resampling filter preferably is a high-quality filter. According to some embodiments of the method, the resampling filter is a cubic filter.

According to some embodiments of the method, the texture information comprises colour information and the texture comprises colours. In some embodiments, the colour information is at least 8-bit (e.g., 16-bit, 32-bit etc.) RGBA colour information.

According to some embodiments, the method comprises receiving a user input defining the lower level of detail.

According to some embodiments of the method, at least the steps of generating the simplified polygonal mesh, generating the simplified texture and providing the simplified textured polygonal mesh are performed iteratively for a plurality of different levels of detail.

According to some embodiments of the method, the simplified texture comprises fewer texels than the texture data related to the first textured polygonal mesh.

According to some embodiments of the method, generating the simplified polygonal mesh comprises using mesh decimation or mesh simplification (i.e. a mesh decimation or mesh simplification algorithm). In one embodiment, Quadric Error edge-collapse simplification is used. In another embodiment, a volume-preserving method is used.

According to some embodiments of the method, the first textured polygonal mesh is a first textured triangular mesh, and the simplified polygonal mesh is a simplified triangular mesh.

A second aspect of the invention pertains to a computer system comprising one or more processors, a data storage, a graphics processing unit (GPU), input means and a display screen, wherein the computer system is configured for performing the method according to any one of the preceding claims.

A third aspect of the invention pertains to a computer program product comprising program code which is stored on a machine-readable medium, or being embodied by an electromagnetic wave comprising a programme code segment, and having computer-executable instructions for performing, in particular when run on a computer system according to the second aspect, the method according to the first aspect of the invention.

The invention in the following will be described in detail by referring to exemplary embodiments that are accompanied by figures, in which:
- Fig. 1a: shows a source model having a high level of detail;
- Fig. 1b: shows a simplified model having texture resolution reduced to one half;
- Fig. 2: shows an exemplary embodiment of a computer system according to the invention;
- Fig. 3: shows a flow chart illustrating an exemplary embodiment of a computer-implemented method according to the invention; and
- Fig. 4: shows a flow chart further illustrating the step of generating a simplified texture of the method of Fig. 3.

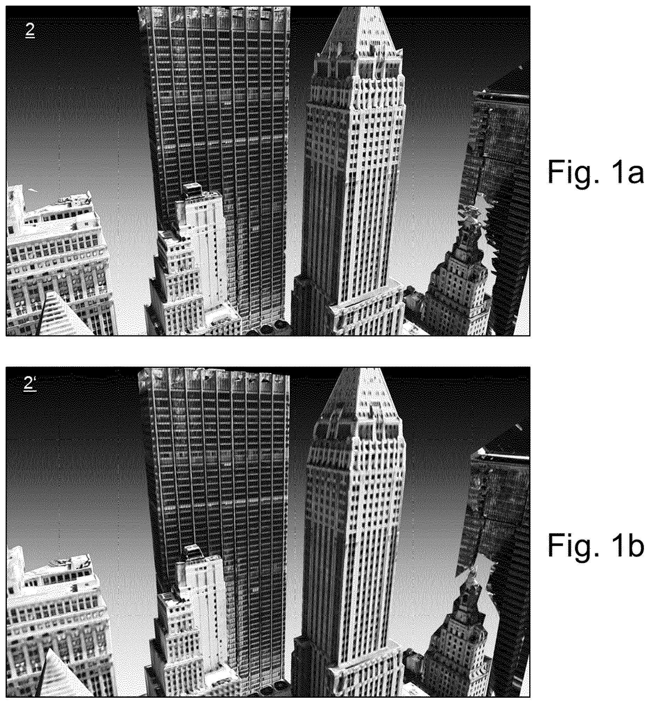

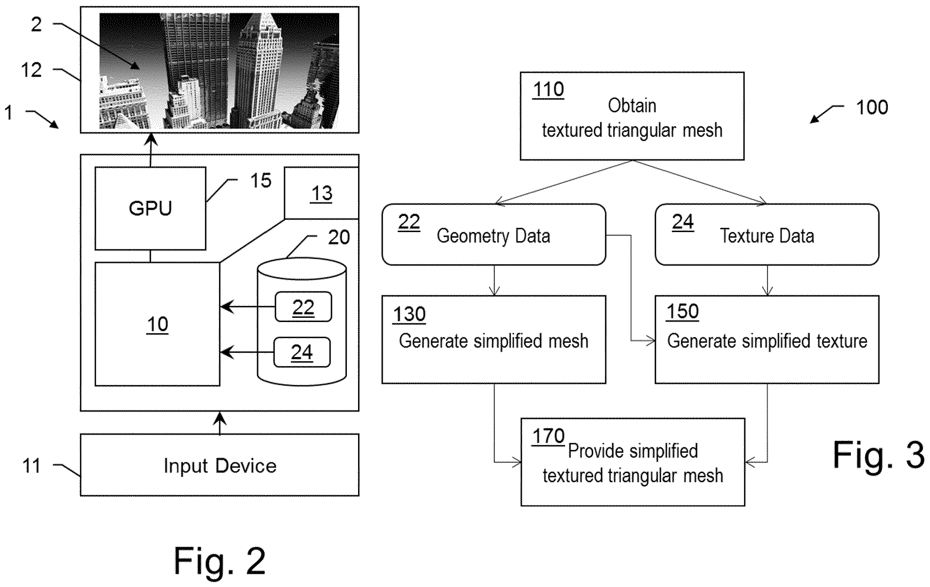

Figures 1a and 1b show a 3D model 2, 2' of an urban environment (a skyline) as an example of a textured triangular mesh. Figure 1a shows the model with an original high level of detail (LOD) ("source model" 2), and Figure 2 shows the same model having a lower LOD ("simplified model" 2'). The simplified model 2' is generated using a method according to the invention by simplifying both the geometry and the texture of the source model 2. The simplified model 2' has a texture resolution reduced by 50% in relation to the source model 2. In other words, the texel size is doubled.

The present invention proposes a simple and fast algorithm to transfer texture data from a high resolution mesh to an independently parametrized simplified mesh. The method naturally allows for high quality filtering when downsampling the texture. The proposed algorithm is partly inspired by texture baking, but does not require ray casting and works directly with the source texels, much like an image resampling filter does. The method does not require the explicit construction of a 1:1 mapping between the parametrizations.

Figure 2 shows an exemplary computer system 1 according to the invention. This system 1 is configured to carry out embodiments of the method according to the invention described further below. The computer system 1 may comprise a mainboard 10 which includes circuitry for powering and interfacing to at least one on-board processor (e.g. a central processing unit (CPU), not shown here) that may comprise two or more discrete processors or processors with multiple processing cores. The main board 10 may act as an interface between a microprocessor and a memory device 20 of the computer system 1. The memory device 20 may comprise one or more optical, magnetic or solid state drives and may store instructions for an operating system and other software of the computer system 1. The main board 10 may also communicate with random access memory (RAM) and read only memory (ROM) of the computer system 1, the ROM typically storing instructions for a Basic Input Output System (BIOS) which the microprocessor may access and which preps the microprocessor for loading of the operating system. The main board 10 also interfaces with a graphics processor unit (GPU) 15. In some systems the GPU 15 may be integrated into the main board 10. The main board 10 may be connected to a communications adapter 13 - for example comprising a LAN adapter or a modem - that places the computer system 1 in data communication with a computer network such as the internet. A user of the computer system 1 interfaces with it by means of one or more input devices 11, such as a keyboard or a mouse, and one or more display devices 12.

It will be understood that the computer system 1 comprises an exemplary electronic processor-based system for carrying out the method. However, the method may also be performed with other electronic processor-based systems. Such systems may include tablet, laptop and netbook computational devices, cellular smart phones, gaming consoles and other imaging equipment, e.g. medical imaging equipment.

The user of the system 1 may operate the operating system to load a computer graphics related software product which may be provided by means of download from the internet or as tangible instructions borne upon a computer readable medium such as an optical disk. The computer graphics related software product includes data structures that store data comprising at least geometry data 22 and texture data 24 (or other attribute data) . The texture data 24 may be provided in a different data structure than the geometry data 22, e.g. as a raster image. The display devices 12 are configured to display a 3D model 2, e.g. of an environment, such as the skyline of Figures 1a and 1b or any other a man-made structure. The 3D model 2 comprises a textured triangular mesh generated from the geometry data 22 and the texture data 24. The software product also includes instructions for a processor or CPU of the system 1 to manipulate the 3D model 2 in response to inputs received from the user via input device 11. This manipulation of the 3D model 2 at least comprises a simplification of the textured triangular mesh in order to provide a different level of detail (LOD) for the 3D model 2. This preparation of the data may be performed in an offline process (e.g. on the CPU). The GPU 15 may be used to display the mesh at the desired LOD to the user.

Figure 3 shows a flow chart illustrating an exemplary embodiment of a method 100 according to the invention. The method starts with obtaining 110 a textured triangular mesh (or any other textured polygonal mesh), i.e. the source mesh that is to be simplified. The mesh comprises geometry data 22, i.e. the untextured triangular (polygonal) mesh, and texture data 24, i.e. a plurality of texels.

Based on the geometry data 22, a simplified mesh is generated 130, i.e. a mesh having fewer triangles (or other polygons) than the source mesh. This step may be performed using volume-preserving methods and other procedures that *per* se are known to the skilled person, e.g. the above-mentioned Quadric Error edge-collapse simplification by Garland and Heckbert.

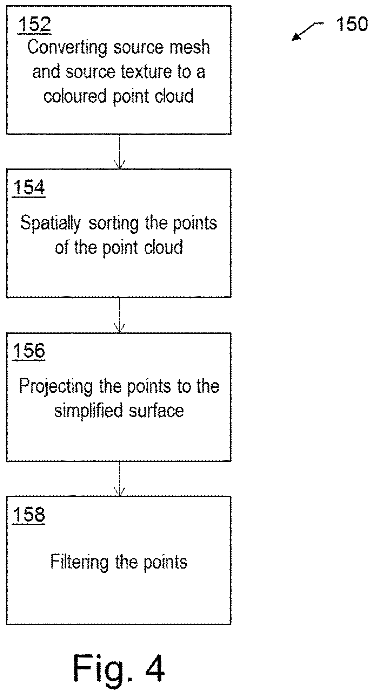

Based on the texture data 24 and also on the geometry data 22, a simplified texture is generated 150 that fits the simplified mesh. This step is described further below with respect to Figure 4.

Having generated, both, a simplified mesh and a fitting simplified texture, the simplified texture is applied to the simplified mesh to provide 170 a simplified textured triangular mesh. The simplified textured triangular mesh may be provided as a separate data file or added to the data file comprising the source mesh. The method 100 may be repeated for a plurality of different LODs, thus providing a plurality of simplified textured triangular meshes.

Figure 4 shows a flow chart further illustrating the step of generating 150 the simplified texture of the method 100 of Figure 3. In an exemplary method according to the invention, this step comprises the following four sub-steps that may be performed by an algorithm, for instance running on the computer system shown in Figure 2:
- converting a source mesh to a coloured point cloud (152);
- spatially sorting the points of the point cloud (154);
- projecting the points to the surface of the simplified mesh (156); and
- filtering the points (158).

The step of converting 152 the source mesh to a coloured point cloud comprises, for each texture pixel (texel) of the source texture atlas that corresponds to a point on the mesh surface, the world coordinates of the surface point are calculated and the point-colour pair is added to a temporary array in RAM, effectively converting the textured mesh to a coloured point cloud, where each point corresponds to one texel.

In some cases the source mesh may contain polygons that are not covered by texture samples of sufficient density. For these areas artificial texture samples are produced interpolated between actual texels, in order to avoid resampling artifacts in the target texture. The density of the artificial samples is dictated by the classic Nyquist theorem.

If single-precision floating point numbers are used to represent (normalized) world coordinates, and 8-bit RGBA colour is added, one point-colour pair requires 16 bytes of RAM. Optionally, a 32-bit source face ID may be included to allow identifying the original face normal, so that one point record would total 20 bytes.

In the step of spatially sorting 154 the points, a spatial sort of the points of the coloured point cloud is performed, which enables fast nearest-neighbour and range queries. For instance, a "kd-sort" algorithm can be used for performing the sorting, resulting in an ordering implied by a *k-*dimensional tree (k-d tree) over the point set, but without actually building the tree explicitly. The points are reordered in-place without the need for additional allocations. In some embodiments, the "QuickSelect" partial sort algorithm may be used to find the median at each "tree" level. In this case, the whole procedure would have a complexity *O*(*n* log *n*). Finding the nearest neighbour in the implicit tree or finding all points within a radius of a point would then have average complexity *O*(log *n*). Efficient kd-sort implementation is crucial for the success and practicality of the method. Applicant's experiments showed that kd-sorting 100 million points in parallel takes about two seconds on a 16-core processor.

The step of projecting 156 the points comprises, for each texel of the simplified mesh ("simple texel") and the corresponding world position, finding all nearby points ("source points") of the coloured point cloud that are within a given radius ("search radius"). The search radius depends on an expected maximum geometric error introduced by the independent meshing and simplification processes. It may be user-selected or defined automatically. The found source points are then projected to the plane of the polygon (e.g. triangle) of the simplified mesh ("simple face") that contains the simple texel, along the plane normal.

In order to avoid excessive blurring, Moiré and other sampling artifacts, a high quality filtering is desirable when downsampling the texture. Within said plane, the projected samples are therefore filtered 158 with a cubic filter with a cut-off period corresponding to the sampling distance of the simple mesh, i.e. the radius of the cubic kernel is chosen according to the Nyquist theorem to be twice the distance between adjacent target texels. A similar high-quality resampling filter might be used instead of the cubic filter. A weighted average of the source samples is then calculated, with weights based on the cubic kernel and the radial distance of the projected samples from the centre of the kernel (the position of the target texel). This step thus comprises performing proper 2D filtering (downsampling) of the original texture.

In rare cases, in which at some point of the simple surface no (or not enough) source texels can be found in the given search radius, or if they mostly fall into the negative lobes of the cubic kernel, the nearest source texel outside of the given search radius (however far it may be) is found, and its colour is just copied. In addition to weighting the projected samples by the reconstruction kernel, the samples are multiplied by max (*dot*(*nₛ,nₜ,*0)*,* where *nₛ* and *nₜ* are the source and target face normals, respectively. Advantageously, this step prevents colour bleeding across sharp edges and from back-facing geometry. In order to reduce colour discontinuities on sharp edges, the method optionally may comprise projecting the source points along a normal that is smoothly interpolated across the simple mesh faces.

On the top level, in the photogrammetric setting, the finest LOD mesh (i.e. the input mesh) is textured the same way as before, by projecting and blending the input images onto the input mesh. For all coarser levels of detail, however, the above-described method and algorithm are used to transfer the texture from the nearest higher LOD and downsample it to the current resolution. This way all LODs can be obtained, for instance so that each coarse LOD has half the texture resolution of the previous higher LOD. This means that in embodiments having more than two levels of detail (n levels of detail), the method and algorithm according to the invention can be used iteratively to first transfer texture from the finest LOD mesh (LOD-0) to the closest coarser mesh (LOD-1), then from LOD-1 to LOD-2, etc., until the coarsest LOD (LOD-n-1) is textured based on the second coarsest mesh (LOD-n-2).

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for simplifying a textured polygonal mesh of a three-dimensional model, the method comprising
- obtaining (110) 3D mesh data (22) and texture data (24) related to a first textured polygonal mesh (2), the first textured polygonal mesh (2) having a first level of detail, the texture data (24) comprising a plurality of texels;
- generating (130), based on the 3D mesh data (22), a simplified polygonal mesh for a second level of detail, the second level of detail being lower than the first level of detail;
- generating (150), based on the texture data (24), a simplified texture for the simplified polygonal mesh; and
- providing (170) a simplified textured polygonal mesh (2') based on the generated simplified polygonal mesh and the generated simplified texture,
**characterized in that**
generating (150) the simplified texture comprises:
- converting (152) the first textured polygonal mesh (2) to a coloured point cloud, wherein each point of the point cloud corresponds to one texel;
- spatially sorting (154) the points of the point cloud;
- projecting (156) the points of the point cloud to a surface of the simplified polygonal mesh; and
- filtering (158) the projected points using a resampling filter.

2. Method (100) according to claim 1, wherein converting (152) the first textured polygonal mesh (2) to a coloured point cloud comprises, for each texel that corresponds to a surface point on a surface of the first textured polygonal mesh (2),
- calculating world coordinates of the surface point, and
- adding a point-colour pair to an array.

3. Method (100) according to claim 1 or claim 2, wherein spatially sorting (154) the points comprises
- using a kd-sort algorithm to achieve an ordering over the point set as implied by a k-dimensional tree; and
- reordering the points in-place.

4. Method (100) according to claim 3, wherein a QuickSelect partial sort algorithm is used to find the median at each level of the k-dimensional tree.

5. Method (100) according to any one of the preceding claims, wherein projecting (156) the points comprises, for each texel of the simplified mesh and the corresponding world position,
- finding all nearby points of the coloured point cloud that are within a given radius around the respective world position, and
- projecting the found points to a plane of the surface of the simplified mesh that contains the texel of the simplified mesh, along a normal vector of the plane.

6. Method (100) according to any one of the preceding claims, wherein the resampling filter is a cubic filter.

7. Method (100) according to any one of the preceding claims, wherein the texture information (24) comprises colour information and the texture comprises colours.

8. Method (100) according to claim 6, wherein the colour information is at least 8-bit RGBA colour information.

9. Method (100) according to any one of the preceding claims, comprising receiving a user input defining the lower level of detail.

10. Method (100) according to any one of the preceding claims, wherein at least the steps of generating (130) the simplified polygonal mesh, generating (150) the simplified texture and providing (170) the simplified textured polygonal mesh (2') are performed iteratively for a plurality of different levels of detail.

11. Method (100) according to any one of the preceding claims, wherein the simplified texture comprises fewer texels than the texture data (24) related to the first textured polygonal mesh (2).

12. Method (100) according to any one of the preceding claims, wherein generating (130) the simplified polygonal mesh comprises using mesh decimation or mesh simplification, particularly Quadric Error edge-collapse simplification or a volume-preserving method.

13. Method (100) according to any one of the preceding claims, wherein the first textured polygonal mesh (2) is a first textured triangular mesh, and the simplified polygonal mesh is a simplified triangular mesh.

14. Computer system (1) comprising one or more processors, a data storage (20), a graphics processing unit (15), input means (11) and a display screen (12),
**characterized in that**
the computer system (1) is configured for performing the method (100) according to any one of the preceding claims.

15. Computer program product comprising program code which is stored on a machine-readable medium, or being embodied by an electromagnetic wave comprising a programme code segment, and having computer-executable instructions for performing, in particular when run on a computer system according to claim 14, the method according to any one of claims 1 to 13.
